# EUROPÄISCHE PATENTANMELDUNG

(11) **EP 1 909 000 A1**
(43) Veröffentlichungstag der Anmeldung: **09.04.2008**
(21) Anmeldenummer: 07019555.7
(22) Anmeldetag: 05.10.2007
(51) Int. Cl.: F16J 15/08

(54) **Dichtungsvorrichtung für Rohre**

(30) Priorität: 08.10.2006 EP 06021111
(71) Anmelder: Hiss, Ludwig, 79346 Endingen (DE)
(72) Erfinder: Hiss, Ludwig, 79346 Endingen (DE)
(74) Vertreter: Miller, Andreas

(57) **Zusammenfassung**

Die Erfindung betrifft eine Dichtungsvorrichtung für Rohre enthaltend mindestens zwei konzentrisch zu den zu verbindenden Rohrteilen angeordnete und unter Druck senkrecht zur Rohrachse flanschartig dicht miteinander zu verbindende und entsprechende Rohrdurchlässe (7) aufweisende Dichtflächen (A) und zwischen den Dichtflächen jeweils mindestens eine konzentrisch und planar um die Rohrdurchlässe angeordnete ring- oder schlauchförmige duktile Dichtung (6) bestehend aus Weichmetall, wobei die Dichtflächen mindestens eine Stufe in Form von einer Treppe (10) enthalten wobei unter Druck die jeweilige Gegentläche der Flansche über der Fläche (A) bündig und dicht anliegt und die Treppenstufen gegenläufig so angeordnet sind, dass das Volumen der zwischen den Flächen liegenden Dichtmasse bei unter Druck verschlossener Dichtung nach jeder Stufe radial von innen nach außen abnimmt.
Der Vorteil der erfindungsgemäßen Dichtung liegt in einer wesentlichen Reduktion der Diffusion von Fremdstoffen, also Gasen mit extrem niedrigem Molekulargewicht, durch den Dichtungsbereich, und gegenüber Kunststoffdichtungen in der Erzielung von sehr viel besseren Dichtigkeitswerten durch die stufenförmige Gestaltung (10) der Flanschoberfläche.

## Beschreibung

Die Erfindung betrifft eine Dichtungsvorrichtung für Rohre enthaltend entsprechend flexible Weichmetalle oder Weichmetallegierungen wie Zinn, Blei, Indium, Gold, Kupfer, Aluminium, insbesondere Metallegierungen mit einer Härte nach Mohs zwischen 1 und 3 als Dichtmasse, sowie Verfahren zu deren Herstellung und Verwendung, die bei abzudichtenden Rohren oder Körpern ähnlicher Art und Bauform insbesondere anstelle von Dichtungen aus Elastomer- und /oder Polymermaterialien eingesetzt werden kann.
Insbesondere betrifft die Erfindung eine neuartige und hochwirksame Anordnung der Dichtungselemente, die eine wesentliche Verbesserung der Dichtigkeit von Dichtungssystemen gegenüber flüchtigen Medien ermöglichen.
Der Vorteil der erfindungsgemäßen Dichtung liegt in einer wesentlichen Reduktion der Diffusion von Fremdstoffen, also Gasen mit extrem niedrigem Molekulargewicht, durch den Dichtungsbereich, und gegenüber Kunststoffdichtungen in der Erzielung von sehr viel besseren Dichtigkeitswerten durch die Verwendung von flexiblen, weichen Metallen oder Metalllegierungen als Dichtungsmaterial.

Eine ausreichende Dichtigkeit zwischen zwei Flächen könnte zwar im Idealfall auch ohne Zuhilfenahme von Dichtungsmaterialien erreicht werden. Dazu müssten aber die zu abzudichtenden Flächen eine praktisch nicht erreichbare glatte Oberfläche aufweisen, bzw. es müsste die Kraft, welche die zu dichtenden Flächen aneinander presst, so groß sein, dass sämtliche Hohlräume, die noch zwischen den Dichtflächen bestehen, so weit eingeebnet werden, dass die Moleküle des zu dichtenden Mediums die entstandenen Grenzzonen zwischen Dichtflächen und Dichtungsmaterial nicht mehr passieren können, weil deren Abstand durchweg geringer ist, als der wirksame Moleküldurchmesser des Gases.

Stand der Technik ist es, zwischen die zu dichtenden Flächen ein weiches Dichtmaterial einzufügen, welches sich beim Zusammenpressen der Gesamtanordnung leicht und flexibel auf die Dichtflächen drücken und in die vorhandenen Hohlräume zwischen den zu dichtenden Flächen eindrücken lässt.

Ein Standardprodukt des Standes der Technik sind die allseits bekannten O-Ringe, weiche in der Regel aus Elastomer- und Polymerkunststoffen bestehen.

Besondere Schwierigkeiten macht verständlicherweise die Abdichtung von unter hohem Druck oder hohem Vakuum stehenden Verbindungen von Rohren mit Flanschen, wenn das abzudichtende Medium Wasserstoff oder Helium ist, da beide Elemente von allen flüchtigen Stoffen den kleinstmöglichen Moleküldurchmesser aufweisen und somit bei Druckunterschieden auch durch kleinste Undichtigkeiten entweichen können. Bei Wasserstoff ist für die Bemessung der Dichtungssysteme darüber hinaus noch die bekannte Metallpenetration zu berücksichtigen.
Die beschriebenen Probleme sind seit langem intensiv untersucht worden und es sind vielfältige Vorschläge zur Optimierung des Dichtungsverhaltens besonders von Flanschverbindungen von Rohren gemacht worden.

Die meisten Entwicklungen der Hochvakuum- oder Hochdrucktechnik bauen auf eine seit mehr als 40 Jahren bekannte Form der Flanschverbindung für Hochvakuumsysteme mit O-Ringen auf. O-Ringe bestehen meist aus Elastomeren bzw. Polymeren, wie z.B. Gummi oder PTFE. Diese sind aber in ihren Dichtungseigenschaften um mindestens den Faktor 10⁻⁶ schlechter als Dichtungen aus Metall.

Im US-Patent Nr. 3,208,758 wird zum Beispiel Kupfer als Weichmetall in Form flacher Dichtscheiben eingesetzt, die zwischen identischen Flanschen so eingebracht wird, dass dessen überstehender Firstteil beim Zusammenpressen der Flansche durch eine entstehende Schrägfläche einen erhöhten Dichtungsdruck erzeugt (Vgl. US-A 5,640,751, Spalte 1, Z. 8-18 und Schweizer Patent Nr. 422 448). Diese Art der Abdichtung wurde durch eine abweichende Gestaltung des Weichmetalls so verbessert, dass die oben beschriebene Ringdichtung durch Dichtungen mit praktisch beliebiger Oberfläche ersetzt werden kann ( US-A 5,640,751 Sp.2, Z. 34-38).

Ein weiterer Lösungsansatz zur Verbesserung der Dichteigenschaften ist im GB-A 2,038,972 beschrieben. Auch hier sollen Abschrägungen und Nute, die sich beim Zusammenpressen der abzudichtenden Teile teilweise mit Dichtmasse füllen oder in diese eindringen, den wirksamen Druck in der einer vertikalen Relativbewegung ausgesetzten Dichtfläche vergrößern und so eine höhere Dichtigkeit erzeugen. Nachteilig an dieser Ausführung ist die schwierige Trennung solcher Verbindungen, etwa bei Wartungsarbeiten (vgl. S.1, Z.31-37 im Zusammenhang mit S.1 Z.100-104).

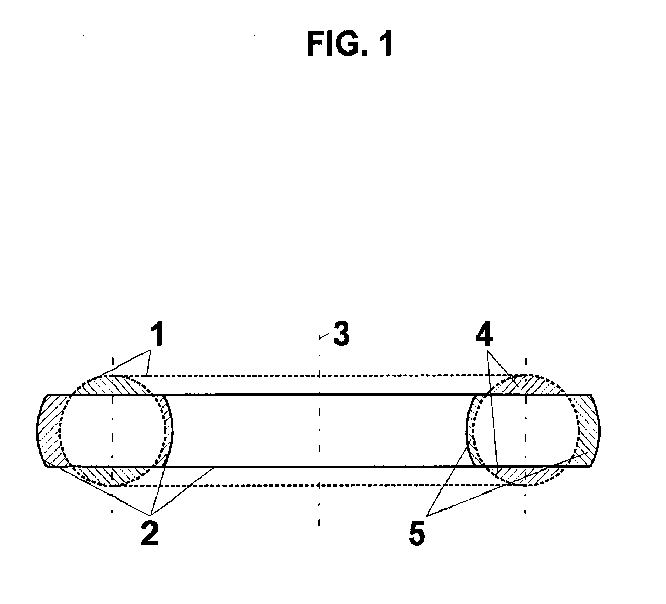

Im US-Patent 2,760,673 wird versucht die Dichteigenschaften durch mindestens zwei O-Ringe mit keilförmigem Querschnitt (Fig.1, 17 und 18) zu erzielen. Dies erfordert aber zur hier spezifischen Druckerhöhung zwischen den O-Ringen einen entsprechend ausgestatteten Kanal (20, 20a) der den Abdichtungsmechanismus unnötig kompliziert und in der Praxis eher für unerwünschte Undichtigkeiten sorgen dürfte, die ebenfalls den Vorteil einer derart veränderten Dichtungsfläche besonders bei hochflüchtigen Gasen wie Helium in Frage stellen.(Sp.1, Z. 56-64).

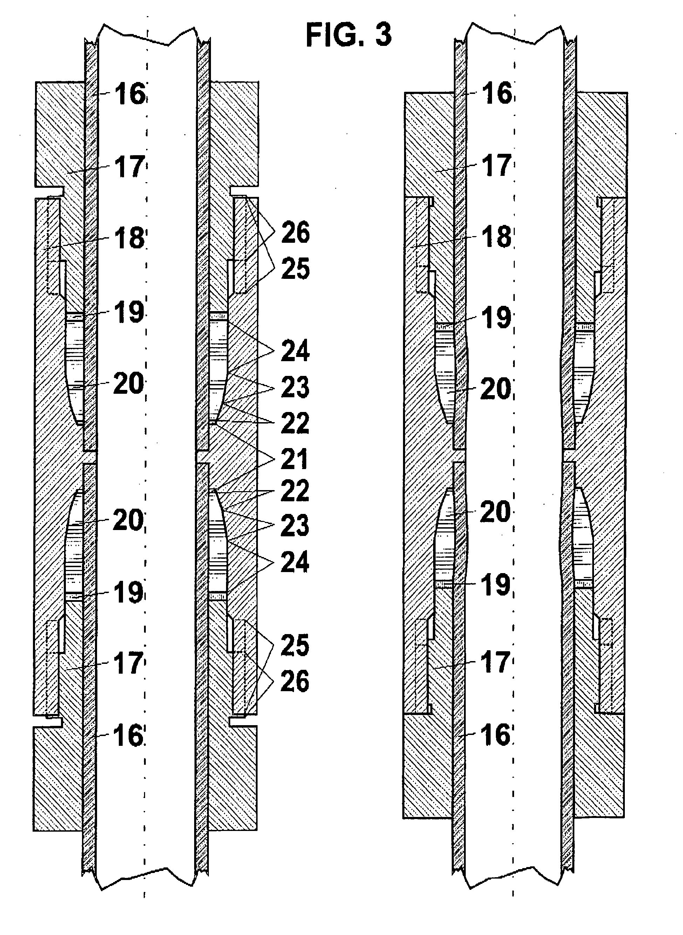

Das FR-Patent Nr. 1,044,153 beschreibt eine Art doppelwandiges Dewar-Gefäß mit innerem Kupferbehälter, das als Autoklav für Hochdruckreaktionen z.B. in flüssigem Sauerstoff verwendet werden soll. Durch keilförmige Teile des Dichtungsrings (Fig.1, 3a) wird eine besondere Druckresistenz bei plötzlichen Temperaturänderungen erreicht (S.2, Sp.1 vorletzter und letzter Satz) und gleichzeitig das Öffnen und Schließen des Gefäßes angeblich sehr erleichtert. Eine Verbesserung der Dichtungsqualität bei Verwendung von Weichmetalldichtmaterial ist nicht beschrieben.

Das FR-Patent Nr. 1,506,567 beschreibt eine linsenförmige Weichmetalldichtung, bei welcher der Druck auf das dickere Mittelstück der horizontal aufgelegten Dichtungsscheibe bei vertikaler Pressung durch Einebnung der mittigen Verdickung einen erhöhten Querdruck zur Verbesserung der Randabdichtung erzeugen soll (Sp.2, Abs. 1-3).

Eine weitere Metalldichtung ist in der DE-A 24 16 808 für Vakuumzwecke beschrieben. Hier werden im wesentlichen nur zur einfacheren Handhabung zwei Dichtungsringe (ein Dichtring und ein Zentrierring), so miteinander kombiniert, dass die Dichtverbindung in besonders einfacher Weise wieder gelöst werden kann. Es ist dann auch bei starker Deformierung nur der Dichtring auszuwechseln, und der Zentrierring kann beliebig oft verwendet werden. (S.2, Abs. 2 und 3).

In der DAS 1 228 871 wird eine Dichtungsanordnung für Hochvakuum- Flanschverbindungen beschrieben, bei welcher der Dichtungsring aus Weichmetall einen aus zwei gegenüberliegenden Rinnen gebildeten Hohlraum beim Zusammenpressen der beiden Flansche ausfüllt. In den Figuren 1 und 3 wird dargestellt, dass durch Gestaltung des Hohlraums mit spitzen Zacken und Abschrägungen der Wandungen eine besondere Form angestrebt wird. Die angeblichen Vorteile dieser Anordnung sind in Sp.3 Z. 30-47 beschrieben und betreffen eine Verbesserung der Dichtigkeit kaum.

Das US-Patent Nr. 3,038,731 betrifft ebenfalls Weichmetalldichtungen zur Erreichung eines hohen Vakuums bei Gefäßen oder Leitungen aus Kupfer, Messing, Edelstahl, Nickel, Molybdän, Wolfram, Tantal, Glas und synthetischem MICA-Silikat, deren Dichtigkeit durch Verflüssigung der Auflagefläche des Dichtmittels beim Abpressen verbessert wird. Als Dichtmittel werden vor allem Gallium, Zinn, Indium, Wismuth und Blei und deren Legierungen vorgeschlagen. Die Verflüssigung wird durch Löten oder unmittelbares Auftragen des flüssigen Dichtmittels erreicht (Sp.2, Z. 50 - 62). Hierbei ist auf eine bestimmte materialbezogene Dicke der Dichtungsschicht zu achten, die besonders bei Legierungen erfindungsgemäß einstellbar ist (Table I). Auf eine besondere Formgestaltung der Dichtungen kommt es hier nicht an, jedoch ist die Anwendung sehr aufwendig.

In der DE-A 1 425 429 ist eine Hochvakuumdichtung insbesondere für Ventile beschrieben, die sich besonders mit der Problematik des Kaltschweißens an Ventilflächen von Vakuumpumpen befasst. Es soll vorschlagsgemäß eine Hochvakuumdichtung geschaffen werden, bei welcher einerseits die auch bei bester Oberflächenbearbeitung verbleibenden Unebenheiten der Dichtfläche geschlossen werden, ohne dass sich die Dichtkörpermaterialien untereinander verschweißen. Eine bestimmte Dichtungsform oder Anordnung wird hier nicht vorgeschlagen (außer einer bevorzugt kegelförmigen Ausbildung der Dichtflächen).

Nach dem oben angeführten Stand der Technik wurden O-Ring Anordnungen mit Heliumleckraten von allenfalls <10⁻⁶ mbar Is⁻¹ erreicht. Dies ist gegenüber heutigen wissenschaftlichen und technischen Anforderungen absolut nicht mehr ausreichend.

Aufgabe der vorliegenden Erfindung ist es daher, möglichst unkompliziert und kostengünstig herstellbare Dichtungsanordnungen mit sehr viel besseren Leckraten möglichst unterhalb der zuverlässigen Nachweisgrenze handelsüblicher Heliumlecksucher (etwa <10⁻¹¹ mbar Is⁻¹) herzustellen.
Für Gasdichtungen muss, aufbauend auf den bekannten Stand der Technik, auf die bekannten günstigen Eigenschaften entsprechend geeigneter Weichmetallzusammensetzungen zurückgegriffen werden. Bei geringeren Anforderungen an die Qualität der Dichtmasse kann aber durchaus auch auf Kunststoff wie etwa hochfluorierte Kohlenwasserstoffe zurückgegriffen werden, weil auch diese durch die erfindungsgemäße Anordnung der Dichtelemente eine Verbesserung entfalten können.

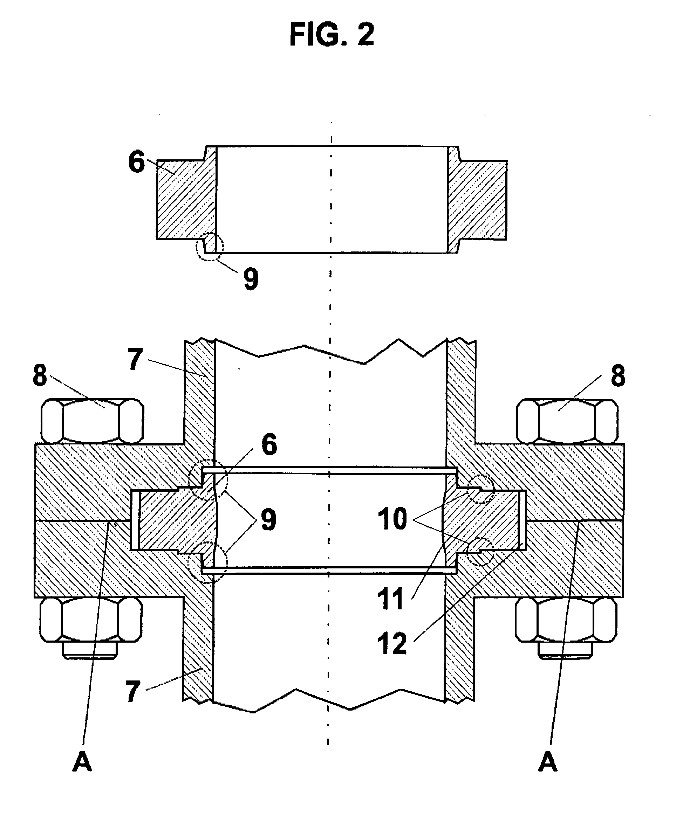

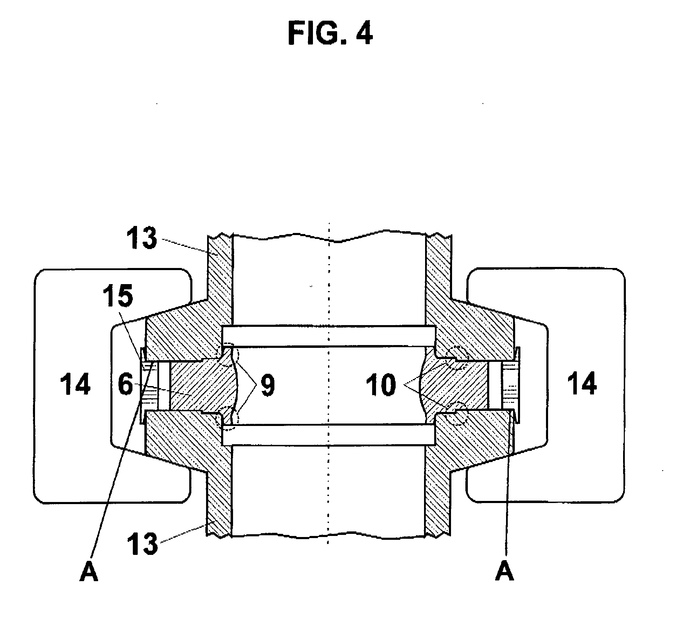

Die Lösung der Aufgabe beruht auf der überraschenden Erkenntnis, dass sich das zwischen ebenen Dichtungsflächen wie bei Flanschen mit glatten Oberflächen in Form eines flachen Rings mit rechteckigem Querschnitt benutzte Dichtmaterial bezogen auf die Verteilung im Querschnitt unter Druck so verteilt, dass es radial nach außen "fließt". Hierbei bildet die Kreisringgeometrie unter hohem Druck einen viel größeren Außendurchmesser als Innendurchmesser des Rings. Das Volumen des im Querschnitt rechteckigen auf einer ebenen Fläche flach aufliegenden Dichtungsrings ändert sich also unter dem Druck eines Stempels mit einer zur Auflagefläche parallelen ebenen Druckfläche so, dass sich ein größerer Teil der Dichtungsmasse radial nach außen verschiebt, als durch eine geometrisch gleichmäßige Verteilung zu erwarten gewesen wäre. Diesen Effekt des radialen Flusses der Dichtungsmasse nach außen macht sich die Erfindung zu Nutze, indem der ansonsten glatte Fluss des Dichtungsmaterials durch gegenläufige treppenartige Stufen zwischen den Auflageflächen so erschwert wird, dass sich an den durch die Treppen gebildeten senkrechten Sperrflächen ein unerwartet hoher Druck aufbaut, der seinerseits die Wirksamkeit des Dichtungsmaterials stark erhöht.
Hieraus ergibt sich auch die Kenntnis, dass die wesentliche Abdichtung durch die erfindungsgemäßen Maßnahmen überraschend an denjenigen Flächen stattfindet, die parallel zur Richtung des eigentlichen Pressdrucks und senkrecht auf den Flanschebenen stehen. Daraus ergibt sich, dass es auf die herkömmlich als einzig wichtig angesehene Abdichtung des Zwischenraums sich gegenüberstehender Flanschebenen nur in zweiter Linie ankommt. Hierdurch werden merkwürdigerweise auch die Ansprüche an die Glätte der Oberflächen der Dichtungselemente stark reduziert und zudem auch keine zusätzlichen Oberflächenbehandlungsmittel, wie Fette, Öle, Silikone oder ähnliche Gleitmittel zur Erzielung der gewünschten Dichtigkeit benötigt.
Das beschriebene zentrifugale Fließverhalten lässt sich am einfachsten durch mindestens eine senkrecht in die aufeinander angepassten Dichtflächen eingefügte Treppenstufe erzielen, deren Stirnfläche möglichst und bevorzugt senkrecht auf den Dichtflächen steht. Die Anwendung mehrerer solcher Hindernisse in Treppenform erhöht die Effektivität des Dichtungsvorgangs.
Bei vorläufigen Versuchen hat sich ergeben, dass durch die erfindungsgemäße Ausgestaltung von Dichtungselementen eine erhebliche Verbesserung der Dichtungseigenschaften insbesondere bei hochflüchtigen Gase wie Wasserstoff oder Helium zu erreichen ist. Die erfindungsgemäße Dichtung hat nämlich gegenüber üblichen Heliumleckraten (10⁻⁶ mbar Is⁻¹) eine Verbesserung auf zwischen 10⁻⁹ mbar I s⁻¹ und 10⁻¹² mbar I s⁻¹ ergeben. Selbst unter weniger aufwendiger Gestaltung der Vorrichtung sind immer noch mühelos 10⁻¹¹ mbar I s⁻¹ erreichbar. Als Dichtungsmaterial eignen sich besonders Zinn, Blei, Indium, Gold, und andere Weichmetalle wie Kupfer und Aluminium, besonders wenn sie vorher bewährten zusätzlichen Vorbehandlungen, wie z.B. "Weichglühen" unterzogen werden. Auch entsprechend weiche Legierungen von Metallen sind selbstverständlich geeignet. Die geeigneten Metalle und Legierungen sollten eine Härte nach Mohs zwischen 1 und 3 aufweisen, bevorzugt zwischen 2 und 3. Besonders wichtig ist es, dass - wie aus den Zeichnungen Fig. 2 und 4 ersichtlich - bei der geschlossenen Dichtung die sich gegenüberliegenden Flansche sich kraftschlüssig mechanisch berühren und somit fest aneinander liegen. Hierdurch wird sichergestellt, dass die Dichtung selbst völlig frei gehalten wird von von außen wirkenden Kräften, die die Dichtungsqualität stark verschlechtern können. Die aneinander liegenden Flächen sind in den Fig. 2 und 4 mit A gekennzeichnet.

Gegenstand der Erfindung ist somit eine Dichtungsvorrichtung für Rohre enthaltend mindestens zwei konzentrisch zu den zu verbindenden Rohrteilen angeordnete und unter Druck senkrecht zur Rotationsachse (3) flanschartig dicht miteinander zu verbindende und entsprechende Rohrdurchlässe aufweisende Dichtflächen und zwischen den Dichtflächen jeweils mindestens eine konzentrisch und planar um die Rohrdurchlässe angeordnete ring- oder schlauchförmige duktile Dichtung (6) bestehend aus Weichmetall, wobei die Vorrichtung dadurch gekennzeichnet ist, dass die Dichtflächen mindestens eine kreisförmig und konzentrisch zum Rohrverlauf angeordnete und mindestens annähernd senkrechte Stufe in Form von einer Treppe (6, 10, 21) enthalten, wobei unter Druck die gegenüberliegenden Flansche sich mechanisch berühren und bündig und kraftschlüssig aneinander anliegen, wobei die Treppenstufen gegenläufig so angeordnet sind, dass das Volumen der zwischen den Flächen liegenden Dichtmasse bei unter Druck verschlossener Dichtung nach jeder Stufe radial von innen nach außen abnimmt.

Ein weiterer Gegenstand ist ein Dichtungsring aus Weichmetall mit mindestens einer treppenförmig radial nach außen hin ansteigender Stufe mit mindestens annähernd senkrechter Stirnfläche.

Ein weiterer Gegenstand der Erfindung ist die Herstellung und Verwendung der oben beschriebenen Vorrichtungen.

Die Gegenstände der Erfindung werden durch die Beschreibung, Beispiele und die zugehörigen Abbildungen näher erläutert.

Kurzbeschreibung der Abbildungen:
**Fig. 1**: Pressverhalten eines aus Zinn hergestellten O-Rings mit kreisförmigem Querschnitt
**Fig. 2:** Ausführung einer "Flächendichtung"
**Fig. 3:** Ausführung einer "Volumendichtung"
**Fig. 4:** Ausführungsbeispiel "Vakuumbauteil -

### Detaillierte Beschreibung der Abbildungen mit den zugehörigen Beispielen:

Fig. 1 zeigt die Form (1) eines aus Zinn hergestellten O-Rings. Er wurde zwischen zwei parallelen, glatten Flächen durch eine Presskraft parallel zur Rotationsachse (3) zusammengedrückt. Der aus diesem Vorgang resultierende Körper (2) zeigt einen Übergang der im Schnitt dargestellten Kreisringsegmente (4) der Form (1) zu der Dicken-, Durchmesser- und Höhenveränderung der Form (2).

An der links schraffiert dargestellten Fläche ist leicht erkennbar, dass der sich ganz links außen gebildete Wulst eine erheblich größere Querschnittsfläche aufweist, als dessen inneres Gegenüber. Es hat somit radial von innen nach außen im O-Ring ein wesentlicher Materialfluss stattgefunden.

Der in Fig. 2 (oberer Bildbereich) dargestellte, ungepresste Dichtring (6) mit rechteckigem Querschnitt soll als eine im Rahmen dieser Erfindung entwickelte Flächendichtung dienen und die Erkenntnis des in Fig. 1 gezeigten Materialfließverhaltens nutzen. Der durch einen gestrichelten Kreis gekennzeichnete Konus (9) vereinfacht das Zusammenfügen der Komponenten der im unteren Teil der Fig. 1 dargestellten Dichtungsanordnung.

Im unteren Bildbereich ist die Dichtungsanordnung in ihrem Presszustand dargestellt. Der beidseitige Zentrierkonus (9) hilft die beiden Dichtungsflansche (7) symmetrisch zur Mittelachse zusammenzufügen. Mit beginnendem Pressdruck, durch Anziehen der Schrauben (8), kerben sich die senkrechten Zentrierkanten der Flansche (7) in den Dichtring ein. Gepaart mit dem Materialfluss, der radial und senkrecht weg von der Mittelachse stattfindet, werden im Bereich (9) und zwar an der senkrechten Wandung des Flansches bereits erste Dichtungsverhältnisse erzielt. Wegen des durch die Zunahme der Dichtungsmasse erhöhten Materialflusses gelingt es durch Einfügung eines zweiten Hindernisses in Treppenform (10) trotz erheblich niedriger Stufe, die Dichtungsqualität noch einmal deutlich zu erhöhen. Die zweite Treppe ist als Absatz mit >0,05 mm Wandhöhe senkrecht zur Materialfließrichtung in die Flansche (7) eingebaut, verringern den Fließquerschnitt erneut und erzeugen einen überraschend hohen Dichtungsmaterialdruck an dieser Stelle. Die Metalldichtung (6) sollte in ihrem Endpresszustand keinen weiteren äußeren mechanischen Einflüssen mehr ausgesetzt werden. Deshalb ist es vorteilhaft, die Konstruktion der Dichtungsstelle für diesen Zustand so auszuführen, dass die Dichtungsflansche (7) alle Kräfte, die auf das System von außen wirken, direkt aufnehmen.
Die in Fig. 2 gezeigte Verformung der Metalldichtung (6) weist diese als "Flächendichtung" aus. Praktische Erfahrungen zeigen negative Einflüsse auf das Dichtungsverhalten, wenn sich die Metalldichtung während des Press- / Fließvorgangs an anderen, außerhalb der gezeichneten Berührungsstellen Flansche (7) / Metalldichtung (6), abstützen kann. Ein der Dichtungsgeometrie angepasster Ausdehnungsfreiraum (12) muss deshalb bei einer optimal wirkenden "Flächendichtung" konstruktiv berücksichtigt werden.

Fig. 3 zeigt an Hand einer Verschraubung für zwei gleiche Rohrleitungen (16) das Beispiel einer "Volumendichtung". Im Gegensatz zur Flächendichtung wird hier der Dichtungsmetallring (20) in einen allseitig verschlossenen Raum gepresst. Die linke Seite der Fig. 3 zeigt die Verschraubung in ungepresstem Zustand. Die Dichtungsmetallringe (20) bestehen aus einem zylindrischen Bereich (24), angrenzendem Konusstumpf (23) mit ca. 1/2 Konuswinkel des angrenzenden Endkonusstumpfs (22). Die die Dichtungsmetallringe (20) zur Außenseite hin umhüllende Verschraubungshülse (18) besitzt an der Einbaustelle der Dichtungsmetallringe (20) dieselbe Kontur (zylindrisch / konisch) wie die Dichtungsmetallringe (20). Der Endkonusstumpf ist bei selbem Endkonuswinkel jedoch verlängert, so dass der Hohlraum (21) entsteht. Durch Pressen der Dichtungsmetallringe (20) in den Hohlraum (21), bei gleichzeitiger Abstützung der Dichtungsmetallringinnendurchmesser (20) an den Rohraußendurchmessern (16), entstehen die Dichtungseigenschaften. Die Pressung erfolgt durch Einschrauben der Druckschrauben (17) in die Verschraubungshülsen (18) in den Feingewindebereichen (25) und (26). Eine dichtungsverschlechtemde Verdrehung der Dichtungsmetallringe (20) während des Pressvorgangs wird durch die Zwischenlegscheibe (19) vermieden. Der maximal mögliche Dichtungsdruck ist erreicht, sobald der Kopf der Druckschraube (17) auf dem Ende der Verschraubungshülse (18) aufsitzt (siehe rechte Seite Fig. 3). Das Volumen der Dichtungsmetallringe (20) wird mittels der Länge des zylindrischen Anteils (24) so bemessen, dass die Rohrwandungen (16) im Bereich der Dichtungsmetallringe (20), auf Basis des hydraulischen Drucks der Dichtungsmetallringe (20) eine leichte Wölbung in Richtung Zentrumsachse erhalten. Diese Wölbung führt zu einer gewünschten, teilweise dauerelastischen Verformung der Rohrwandungen (16), die die Langzeitbeständigkeit des Dichtungsverhaltens positiv beeinflusst. Der Anwender erhält durch das "Festschrauben" der Druckschrauben (17) auf der Verschraubungshülse (18) außerdem eine sehr einfache Montagehilfe.
Die erfindungsgemäß verstärkte Abdichtung erfolgt, wenn nach Ausfüllung des Hohlraums (19) die Dichtungsmasse (20) auf die Verschraubungshülse (18) trifft und der durch den seitlichen Druck ausgelöste unsymmetrische Materialtransport in Analogie zu den Fig. 1 und 2 die Anschlussstelle mit überhöhter Kraft versiegelt.

Die in Fig. 3 aufgezeigte Lösung funktioniert auch als einfache Rohrverbindung zu einem beliebigen Körper. Die Funktionen der Verschraubungshülse (18) werden zu diesem Zweck direkt in den Körper gebohrt, die Dichtungselemente (17), (19) und (20) können ohne Änderungen übernommen werden.

Fig. 4 Im Unterschied zur bisherigen Beschreibung der "Flächendichtungen" wird bei dieser Vorrichtung die der Druck durch Gegeneinanderziehen der Spannringe (14) erzeugt. Die Endlage der Pressung wird in diesem Fall durch den Abstandsfixierring (15) über die Fläche A erzeugt. Durch einen Zinnring (6) wurden ebenfalls hervorragende Dichtigkeitswerte erreicht. Äußere Krafteinflüsse (z.B. hervorgerufen durch Vibrationen der Pumpen) haben keine Verschlechterung bezüglich des Lebensdauerverhaitens gezeigt. Die erfindungsgemäßen Stufen oder Treppen sind wiederum als gestrichelte Kreise gekennzeichnet.
Zur Untersuchung der Wirksamkeit der erfindungsgemäßen Dichtungsvorrichtung wurden Versuche mit Helium durchgeführt:
Die Messungen der Helium - Leckdichtigkeit erfolgen in einer die Bauteile umgebenden, reinen Helium Atmosphäre. Der Leck- bzw. Diffusionsstrom wird im Innenbereich der Versuchsanordnungen detektiert. Alle aufgezeigten Lösungen erzielten dabei Leckraten unterhalb der maximalen Auflösung von 10⁻¹¹ mbar is⁻¹ marktüblicher Messgeräte.
Die Dichtungsmetallringe können erfindungsgemäß problemlos mit spanabhebenden Werkzeugmaschinen auf Basis von teilweise auch selbst gegossenen Halbzeugen hergestellt werden. Beispielsweise sind geeignete Zinnrohre als Ausgangsprodukte derzeitig am Markt nicht verfügbar. Für die Massenproduktion sind auch Stanztechniken und/oder Umformungstechniken geeignet.
Mit den jeweils fabrikneu eingesetzten Ausführungskomponenten "Vakuumbauteil - ISO-KF Kleinflansch (DIN 28403)" und Dichtungen an Ventilen, die für Analysezwecke geeignet sind, wurde der Nachweis geführt, dass keine erhöhten Ansprüche an die bisherigen Produkte bezüglich der Oberflächenrauhigkeit von Dichtsitzen Voraussetzung für den Einsatz von Weichmetalldichtungen sind.
Die dichtungserzeugenden Druck- bzw. Fließkräfte waren in allen Prüfanordnungen mit den üblichen Spann- / Druckvorrichtungen (Schrauben / Gewinden) erzielbar. Da die Diffusionswiderstände von Metallen um mehrere Größenordungen größer sind als bei den bisher eingesetzten Kunststoffen, können bei Neukonstruktionen die benötigten Kräfte auf Basis kleiner Dichtungsquerschnitte sogar reduziert werden.

## Patentansprüche

1. Dichtungsvorrichtung für Rohre enthaltend mindestens zwei konzentrisch zu den zu verbindenden Rohrteilen angeordnete und unter Druck senkrecht zur Rohrachse flanschartig dicht miteinander zu verbindende und entsprechende Rohrdurchlässe aufweisende Dichtflächen und zwischen den Dichtflächen jeweils mindestens eine konzentrisch und planar um die Rohrdurchlässe angeordnete ring- oder schlauchförmige duktile Dichtung bestehend aus Weichmetall, **dadurch gekennzeichnet, dass** die Dichtflächen mindestens eine kreisförmig und konzentrisch zum Rohrverlauf angeordnete und mindestens annähernd senkrechte Stufe in Form von einer Treppe (10) enthalten, wobei unter Druck die jeweilige Gegenfläche der Flansche über der Fläche (A) bündig und dicht anliegt und die Treppenstufen gegenläufig so angeordnet sind, dass das Volumen der zwischen den Flächen liegenden Dichtmasse bei unter Druck verschlossener Dichtung nach jeder Stufe radial von innen nach außen abnimmt.

2. Vorrichtung gemäß Anspruch 1, **dadurch gekennzeichnet, dass** der Dichtring (6) als Flächendichtung eine rechteckige oder rechteckähnliche Querschnittsfläche besitzt.

3. Vorrichtung gemäß der Ansprüche 1 bis 2, **dadurch gekennzeichnet, dass** der Dichtring (20) als Volumendichtung eine Rechteckform mit sich konisch zuspitzenden Flächen besitzt.
